# EUROPÄISCHE PATENTSCHRIFT

(11) **EP 2 018 983 B1**
(45) Veröffentlichungstag und Bekanntmachung des Hinweises auf die Patenterteilung: **27.07.2011**
(21) Anmeldenummer: 08009787.6
(22) Anmeldetag: 29.05.2008
(51) Int. Cl.: B60G 21/073, B60G 7/00, B62D 17/00

(54) **Fahrwerkssystem für ein Kraftfahrzeug und Verfahren zur Fahrdynamikregelung**
Suspension system for a motor vehicle and method for controlling the vehicle dynamics
Système de suspension pour un véhicule automobile et procédé destiné à la régulation de la dynamique de véhicule

(30) Priorität: 26.07.2007 DE 102007034840
(43) Veröffentlichungstag der Anmeldung: 28.01.2009
(73) Patentinhaber: Dr. Ing. h.c. F. Porsche AG, 70435 Stuttgart (DE)
(72) Erfinder: Koch, Thorsten, 71701 Schwieberdingen (DE); Hunn, Thomas, 71272 Renningen (DE)

(56) Entgegenhaltungen:
- EP-A- 0 378 028
- EP-A1- 1 475 256
- WO-A-99/54186
- DE-A1- 19 637 159
- DE-A1-102004 014 576
- US-A- 4 700 972
- US-A1- 2007 013 151

## Beschreibung

Die Erfindung betrifft ein Fahrwerkssystem für ein Kraftfahrzeug mit einer Vorrichtung zur Wankstabilisierung und mit einer Vorrichtung zur Radsturzverstellung. Die Erfindung betrifft auch ein Verfahren zur Fahrdynamikregelung eines Kraftfahrzeugs unter Verwendung eines entsprechenden Fahrwerkssystems.

Aus der EP 1 754 649 A1 ist eine Einrichtung zur Verstellung des Radsturzes einer Fahrzeugachse eines Kraftfahrzeuges bekannt, wobei wenigstens zwei zur Anlenkung der Räder vorgesehene Fahrwerkslenker vorgesehen sind, an denen ein Aktuator zur Veränderung der Lage dieser Fahrwerkslenker angreift, wobei eine längsverschiebliche Aktuatorachse des Aktuators einerseits an dem einen Fahrwerkslenker und andererseits an dem anderen Fahrwerkslenker angreift, wobei der Aktuator neben der Aktuatorachse einen Elektromotor und einen Kugelgewindetrieb umfasst.

Die DE 10 2004 014 576 A1 schlägt ein Verfahren zur Fahrstabilitätsregelung eines Fahrzeuges vor, bei dem in Abhängigkeit von einem Fahrzustand ein hinterer Radsturzwinkel der Räder der Hinterachse aktiv eingestellt wird, und an der Vorderachse ein vorderes Antiwankmoment und an der Hinterachse ein hinteres Antiwankmoment ausgeübt werden, wobei eine das Verhältnis des hinteren Antiwankmomentes zu dem vorderen Antiwankmoment wiedergebende Wankmomentverteilung in Abhängigkeit von dem hinteren Radsturzwinkel der Räder der Hinterachse eingestellt wird.

Dokument WO 99/54186 A offenbart eine automatische Vorrichtung zur Reduzierung der Effekte der Zentrifugalkraft auf ein Kraftfahrzeug während einer Kurvenfahrt, die einen Zentrifugalkraft-Abtaster, eine Vielzahl an bewegenden Kolben, eine Pumpe, die ein Fluid in hydraulischen Stoßdämpfer leitet, und ein Kontrollmodul umfasst.

Dokument US 4,700,972 offenbart ein Federungssystem für ein Kraftfahrzeug, welches Sensoren und eine zentrale Regelung verwendet, um Federung- und fahrverhalten-Parameter zu ändern. Je Rad ist eine senkrechte Kontrolleinheit vorgesehen, bestehend aus einem Kolben und einem mit Flüssigkeit versorgten Zylinder, der von einer zentralen Regeleinheit mit der Flüssigkeit versorgt wird.

Aufgabe der vorliegenden Erfindung ist es, ein Fahrwerkssystem und ein Verfahren zur Fahrdynamikregelung eines Kraftfahrzeugs bereitzustellen, welche die Fahrdynamik verbessern und welche in kompakter Bauweise realisiert werden können.

Diese Aufgabe wird erfindungsgemäß gelöst durch ein Fahrwerkssystem für ein Kraftfahrzeug mit den Merkmalen des unabhängigen Patentanspruchs 1. Vorteilhafte Weiterbildungen der Erfindung sind Gegenstand der abhängigen Patentansprüche. Die Aufgabe wird auch gelöst durch ein Verfahren zur Fahrdynamikregelung gemäß Patentanspruch 5.

Bei einem Fahrwerkssystem der eingangs genannten Art weisen erfindungsgemäß die Vorrichtung zur Wankstabilisierung und die Vorrichtung zur Radsatzverstellung ein oder mehrere hydraulische Stellvorrichtungen auf, wobei die Vorrichtung zur Wankstabilisierung und die Vorrichtung zur Radsturzverstellung mittels eines gemeinsamen Hydrauliksystems miteinander gekoppelt sind. Bei dem erfindungsgemäßen Fahrwerkssystem sind Wankstabilisierung und Radsturzverstellung miteinander integriert. Dadurch wird die Regelung deutlich vereinfacht, es werden verhältnismäßig wenig Ventilkomponenten benötigt und es wird ein höchst effektives integriertes System bereitgestellt.

Mit Vorteil kann die Vorrichtung zur Wankstabilisierung mindestens eine mit einem Stabilisator gekoppelte hydraulische Stellvorrichtung aufweisen.

In vorteilhafter Weiterbildung kann die hydraulische Stellvorrichtung als Schwenkbetätigungseinrichtung für den Stabilisator ausgebildet sein.

Mit Vorteil kann die Vorrichtung zur Radsturzverstellung je Rad einen als lineare Stellvorrichtung ausgebildeten Hydraulikzylinder aufweisen.

Mit Vorteil kann das gemeinsame Hydrauliksystem eine Druckversorgungsvorrichtung aufweisen, die über Leitungen mit den ein oder mehreren hydraulischen Stellvorrichtungen der Vorrichtung zur Wankstabilisierung und der Vorrichtung zur Radsturzverstellung verbunden ist, wobei zwischen der Druckversorgungsvorrichtung und den hydraulischen Stellvorrichtungen mindestens eine Ventilvorrichtung vorgesehen ist.

Zweckmäßigerweise kann die Druckversorgungsvorrichtung derart ausgebildet sein, dass der Solldruck im Hydrauliksystem in Abhängigkeit von Fahrzeugzuständen eingestellt wird, wobei zur Ermittlung eines Fahrzeugzustands mindestens eines der folgenden Signale verwendet wird: Querbeschleunigung, Lenkradwinkel, Fahrzeuggeschwindigkeit, Wankwinkel.

Mit Vorteil kann für die Vorrichtung zur Radsturzverstellung, d.h. insbesondere für deren hydraulische Stellvorrichtungen, mindestens eine Vorrichtung zur Anpassung des Hydraulikdrucks und/oder des Hydraulikflusses vorgesehen sein.

Zweckmäßigerweise kann das Fahrwerkssystem für eine oder für mehrere Fahrzeugachsen ausgelegt sein.

Die der Erfindung zugrunde liegende Aufgabe wird auch gelöst durch ein Verfahren zur Fahrdynamikregelung eines Kraftfahrzeugs unter Verwendung eines Fahrwerkssystems gemäß der Erfindung oder einer ihrer Weiterbildungen zur aktiven Wankstabilisierung und zur aktiven Radsturzverstellung in Abhängigkeit eines Fahrzeugzustands des Kraftfahrzeugs.

Weitere Einzelheiten und Vorteile der Erfindung werden nachfolgend beispielhaft unter Bezugnahme auf die Zeichnung erläutert. Es zeigt:

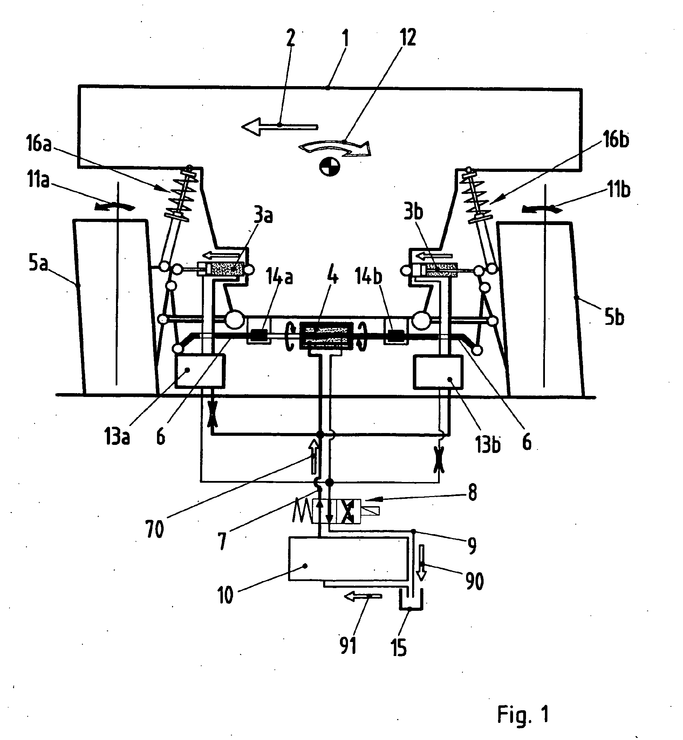

Fig. 1 eine schematische Darstellung des Fahrwerkssystems am Beispiel einer Fahrzeugachse.

Fig. 1 zeigt in schematischer Prinzipdarstellung einen Fahrzeugaufbau 1 und ein Fahrwerkssystem, beispielhaft dargestellt in Verbindung mit einer Achse eines Kraftfahrzeugs. Zwei Räder 5a, 5b sind einer gemeinsamen Achse des Kraftfahrzeugs zugeordnet und weisen jeweils eine Radaufhängung 16a, 16b auf. Zwischen den Rädern 5a, 5b ist ein Stabilisator 6, vorzugsweise ein Kurven-Stabilisator, angeordnet. Der Stabilisator 6 kann durch Stabilisatorlager 14a, 14b mit dem Fahrzeugaufbau 1 gekoppelt sein. Zur Wankstabilisierung ist am Stabilisator 6 eine hydraulische Stellvorrichtung 4 angeordnet, die im gezeigten Beispiel als Schwenkbetätigungseinrichtung, z.B. als Rotationssteller, für den Stabilisator 6 ausgebildet ist. Die hydraulische Stellvorrichtung 4 kann beispielsweise auch als Linearaktor ausgebildet sein. Zur Radsturzverstellung ist im gezeigten Beispiel je Rad 5a, 5b eine hydraulische Stellvorrichtung 3a, 3b vorgesehen. Im gezeigten Beispiel sind die hydraulischen Stellvorrichtungen 3a, 3b zur Radsturzverstellung als lineare Stellvorrichtungen in Form von Hydraulikzylindern ausgebildet. Es ist auch möglich, als hydraulische Stellvorrichtungen 3a, 3b Schwenkaktoren vorzusehen, was in der Zeichnung jedoch nicht näher dargestellt ist. Die Schwenkaktoren sind vorzugsweise jeweils über einen Hebel mit der Spurstange gekoppelt. Im gezeigten Beispiel ist ein Fahrzeugzustand angedeutet, bei dem sich das Kraftfahrzeug in einer Kurvenfahrt befindet, wobei der Pfeil 2 die Richtung zur Kurvenmitte angibt. Dementsprechend stellt sich - bedingt durch die Kurvenfahrt - eine durch den Pfeil 12 angedeutete Wankbewegung ein. Die Räder 5a, 5b bzw. die Reifen weisen einen Sturzwinkel 11a, 11b auf.

Die gezeigten hydraulischen Stellvorrichtungen 4 bzw. 3a, 3b sowohl der Vorrichtung zur Wankstabilisierung als auch der Vorrichtung zur Radsturzverstellung weisen ein gemeinsames Hydrauliksystem auf. Der notwendige hydraulische Fluss wird durch eine Druckversorgungsvorrichtung 10 bereitgestellt, wobei der hydraulische Fluss und/oder der Hydraulikdruck, vorzugsweise in Abhängigkeit von den wirkenden Querkräften, gesteuert und/oder geregelt wird. Die Druckversorgungsvorrichtung 10 ist über Leitungen 7, 9 mit den hydraulischen Stellvorrichtungen 3a, 3b, 4 gekoppelt. Im gezeigten Beispiel ist die Leitung 7 des Hydrauliksystems die Zuflussleitung. Die Rücklaufleitung ist gemäß diesem Beispiel die Leitung 9. Dementsprechend ist für den dem gezeigten Beispiel entsprechenden Fahrzeugzustand der hydraulische Fluss mit den Pfeilen 70, 90, 91 angedeutet.

Das gezeigte Hydrauliksystem weist einen Tank 15 für Hydraulikflüssigkeit auf. Es ist mindestens eine Ventilvorrichtung 8 vorgesehen, die beispielsweise ein Richtungsventil aufweisen kann, mit Hilfe dessen die Druckbeaufschlagung der richtigen Kolbenflächen entsprechen der jeweiligen Kurvenrichtung bzw. deren Änderung erfolgen kann.

Der Fahrzeugaufbau 1 würde ohne Wankstabilisierung bei einer Kurvenfahrt eine Wankbewegung in Richtung des Pfeils 12, d.h. eine Neigung, nach Kurvenaußen, vollziehen. Um diese Wankbewegung zu mindern bzw. zu verhindern, bewirkt die hydraulische Stellvorrichtung 4 zur Wankstabilisierung ein Torsionsmoment im Stabilisator 6, das den Fahrzeugaufbau 1 durch Abstützkräfte in den Stabilisatorlagern 14a, 14b stabilisiert.

Die aktive Sturzverstellung neigt die Reifen bzw. Räder 5a, 5b entgegen der Querkraftrichtung in die Kurve. Dies erfolgt unter Zuhilfenahme der Stellvorrichtungen 3a, 3b. Die Stellvorrichtungen 3a, 3b sind untereinander gekoppelt und mit den hydraulischen Zu- und Abflussleitungen der Wankstabilisierung verbunden. Weiterhin kann für die Radsturzverstellung mindestens eine Vorrichtung 13a, 13b zur Anpassung des Hydraulikdrucks und/oder des Hydraulikflusses vorgesehen sein. Eine derartige Anpass-Hydraulik kann je nach Dimensionierung der Stellvorrichtungen 3a, 3b zur Radsturzverstellung zur Minderung des Drucks bzw. des Flusses eingesetzt werden. Es kann zweckmäßig sein, den Sturz zu messen und/oder rechnerisch zu ermitteln. Die Radsturzverstellung bzw. die Anpassung des Hydraulikdrucks und/oder des Hydraulikflusses zur Radsturzverstellung kann in Abhängigkeit des gemessenen und/oder ermittelten Sturzes erfolgen. Die aktive Radsturzverstellung bewirkt durch eine Neigung des Reifens um seine Längsachse eine Optimierung der Reifenaufstandsfläche. Derart wird der Verformung der Reifenaufstandsfläche unter Einfluss der Querkraft durch ein Neigen des Reifens in die Kurve entgegengewirkt. Der Reifen kann hierdurch größere Querkräfte übertragen.

Bei der erfindungsgemäßen aktiven Sturzverstellung wird die Energie für die Sturzverstellung durch dieselbe Hydraulikversorgung bereitgestellt, die auch Energie für die Wankstabilisierung bereitstellt. Die Wankstabilisierung dient zur Minimierung des Wankwinkels bei Kurvenfahrt, wobei die Hydraulikversorgung in Verbindung mit Ventilen und mindestens einer Stellvorrichtung'4 am Stabilisator 6 in Abhängigkeit von Fahrzeugzuständen, z.B. einer gemessenen und/oder berechneten Querbeschleunigung, eine stabilisierende Kraft auf den Aufbau bewirkt.

Die Energieversorgung sowohl der aktiven Wankstabilisierung als auch der aktiven Radsturzverstellung erfolgt hydraulisch, wobei der Solldruck auf Grundlage von Fahrzeugzuständen festgelegt wird. Ein Fahrzeugzustand kann durch ein oder mehrere der folgenden gemessenen und/oder berechneten Größen bestimmt werden: Querbeschleunigung, Lenkradwinkel, Fahrzeuggeschwindigkeit, Wankwinkel. Die Druckeinstellung kann z.B. mit Hilfe von Sensoren für beispielsweise Querbeschleunigung, Lenkradwinkel, Fahrzeuggeschwindigkeit, Druck, hydraulischen Fluss und/oder Weg(e) bzw. Position(en) der Stellvorrichtungen erfolgen.

Ein für die Erfindung wesentlicher Gedanke ist die Verknüpfung einer Wankstabilisierung mit einer Sturzverstellung bei Kraftfahrzeugen. Es wird eine aktive Sturzverstellung realisiert, wobei die hydraulische Leistungsversorgung und die Ventile der Wankstabilisierung verwendet werden. Der hydraulische Fluss versorgt sowohl die Aktoren der Wankstabilisierung als auch die Aktoren zur Sturzverstellung. Die Erfindung und die entsprechende Lehre kann bei einer unterschiedlichen Anzahl von Stellvorrichtungen 3a, 3b, 4, bei einer unterschiedlichen Anzahl von Ventilvorrichtungen und bei einer unterschiedlichen Anzahl von Druckversorgungsvorrichtungen 10 eingesetzt werden.

## Patentansprüche

1. Fahrwerkssystem für einen Fahrzeugaufbau (1) eines Kraftfahrzeugs mit einer Vorrichtung zur Wankstabilisierung, einer Vorrichtung zur Radsturzverstellung und mindestens einem zwischen zwei einer gemeinsamen Achse zugeordneten Rädern (5a, 5b) angeordneten Stabilisator (6), wobei die Vorrichtung zur Wankstabilisierung und die Vorrichtung zur Radsturzverstellung mittels eines gemeinsamen Hydrauliksystems miteinander gekoppelt sind, und die Vorrichtung zur Radsturzverstellung je Rad (5a, 5b) eine hydraulische lineare Stellvorrichtung (3a, 3b) aufweist, **dadurch gekennzeichnet, dass** die Vorrichtung zur Wankstabilisierung mindestens eine mit dem Stabilisator (6) gekoppelte hydraulische, als Schwenkbetätigungseinrichtung ausgebildete Stellvorrichtung (4) aufweist und die hydraulische Stellvorrichtung (4) zur Wankstabilisierung dazu konfiguriert ist, ein Torsionsmoment im Stabilisator (6) zu bewirken, um den Fahrzeugaufbau (1) durch Abstützkräfte in Stabilisatorlagern (14a, 14b) zu stabilisieren, und das gemeinsame Hydrauliksystem eine Druckversorgungsvorrichtung (10) aufweist, die über Leitungen (7, 9) mit den ein oder mehreren hydraulischen Stellvorrichtungen (4 bzw. 3a, 3b) der Vorrichtung zur Wankstabilisierung und der Vorrichtung zur Radsturzverstellung verbunden ist, wobei zwischen der Druckversorgungsvorrichtung (10) und den hydraulischen Stellvorrichtungen (4 bzw. 3a, 3b) mindestens eine gemeinsame Ventilvorrichtung (8) vorgesehen ist.

2. Fahrwerkssystem nach Patentanspruch 1, wobei die Druckversorgungsvorrichtung (10) derart ausgebildet ist, dass ein Solldruck im Hydrauliksystem in Abhängigkeit des Fahrzeugszustands eingestellt wird, wobei zur Ermittlung des Fahrzeugzustands eines oder mehrere folgender Signale verwendet wird: Querbeschleunigung, Lenkradwinkel, Fahrzeuggeschwindigkeit, Wankwinkel.

3. Fahrwerkssystem nach einem der Patentansprüche 1 oder 2, wobei für die Vorrichtung zur Radsturzverstellung mindestens eine Vorrichtung (13a, 13b) zur Anpassung des Hydraulikdrucks und/oder des Hydraulikflusses vorgesehen ist.

4. Fahrwerkssystem nach einem der Patentansprüche 1 bis 3, welches für eine oder mehrere Fahrzeugachsen ausgelegt ist.

5. Verfahren zur Fahrdynamikregelung eines Kraftfahrzeugs unter Verwendung eines Fahrwerkssystems nach einem vorangehenden Ansprüche zur aktiven Wankstabilisierung und zur aktiven Radsturzverstellung in Abhängigkeit eines Fahrzeugzustands des Kraftfahrzeugs.

## Claims

1. Chassis system for a vehicle body (1) of a motor vehicle having a device for roll stabilization, a device for wheel camber adjustment and at least one stabilizer (6) arranged between two wheels (5a, 5b) assigned to a common axle, wherein the device for roll stabilization and the device for wheel camber adjustment are coupled to one another by means of a common hydraulic system, and the device for wheel camber adjustment having one hydraulic linear actuating device (3a, 3b) per wheel (5a, 5b), **characterized in that** the device for roll stabilization has at least one hydraulic actuating device (4) which is coupled to the stabilizer (6) and which is designed as a pivoting actuating device, and the hydraulic actuating device (4) for roll stabilization is configured to generate a torsional moment in the stabilizer (6) in order to stabilize the vehicle body (1) by means of support forces in stabilizer mounts (14a, 14b), and the common hydraulic system has a pressure supply device (10) which is connected by means of lines (7, 9) to the one or more hydraulic actuating devices (4 or 3a, 3b) of the device for roll stabilization and of the device for wheel camber adjustment, wherein at least one common valve device (8) is provided between the pressure supply device (10) and the hydraulic actuating devices (4 or 3a, 3b).

2. Chassis system acording to Patent Claim 1, wherein the pressure supply device (10) is designed such that a nominal pressure in the hydraulic system is set as a function of the vehicle state, wherein one or more of the following signals is used in order to determine the vehicle state: lateral acceleration, steering wheel angle, vehicle speed, roll angle.

3. Chassis system acording to one of Patent Claims 1 or 2, wherein at least one device (13a, 13b) for adapting the hydraulic pressure and/or the hydraulic flow is provided for the device for wheel camber adjustment.

4. Chassis system acording to one of Patent Claims 1 to 3, which chassis system is designed for one or more vehicle axles.

5. Method for driving dynamics regulation of a motor vehicle using a chassis system acording to one of the preceding claims for active roll stabilization and for active wheel camber adjustment as a function of a vehicle state of the motor vehicle.

## Revendications

1. Système de suspension pour une caisse de véhicule (1) d'un véhicule automobile avec un dispositif de stabilisation du roulis, un dispositif de réglage du carrossage de roue et au moins un stabilisateur (6) disposé entre deux roues (5a, 5b) associées à un essieu commun, le dispositif de stabilisation du roulis et le dispositif de réglage du carrossage de roue étant couplés l'un à l'autre à l'aide d'un système hydraulique commun et le dispositif de réglage du carrossage de roue comportant respectivement pour chaque roue (5a, 5b) un dispositif de réglage (3a, 3b) linéaire hydraulique, **caractérisé en ce que** le dispositif de stabilisation du roulis comporte au moins un dispositif de réglage (4) hydraulique couplé au stabilisateur (6) et réalisé sous la forme d'un dispositif d'actionnement pivotant et que le dispositif de réglage (4) hydraulique de stabilisation du roulis est configuré pour provoquer un couple de torsion dans le stabilisateur (6), pour stabiliser la caisse du véhicule (1) du fait des forces d'appui s'exerçant dans les paliers du stabilisateur (14a, 14b), et le système hydraulique commun comportant un dispositif d'alimentation en pression (10) relié avec le ou les dispositifs de réglage (4 et/ou 3a, 3b) hydrauliques du dispositif de stabilisation du roulis et au dispositif de réglage du carrossage de roue par le biais des conduites (7, 9), au moins un dispositif de vanne (8) commun étant prévu entre le dispositif d'alimentation en pression (10) et les dispositifs de réglage (4 et/ou 3a, 3b) hydrauliques.

2. Système de suspension selon la revendication 1, le dispositif d'alimentation en pression (10) étant réalisé de telle sorte qu'une pression théorique est réglée dans le système hydraulique en fonction de l'état du véhicule, sachant que pour déterminer l'état du véhicule, un ou plusieurs des signaux suivants sont utilisés : accélération transversale, angle du volant de direction, vitesse du véhicule, angle de roulis.

3. Système de suspension selon l'une quelconque des revendications 1 ou 2, au moins un dispositif (13a, 13b) étant prévu pour le dispositif de réglage du carrossage de roue en vue d'adapter la pression hydraulique et/ou le débit hydraulique.

4. Système de suspension selon l'une quelconque des revendications 1 à 3, mis en place pour un ou plusieurs essieux de véhicule.

5. Procédé destiné à la régulation de la dynamique de véhicule d'un véhicule automobile en utilisant un système de suspension selon l'une quelconque des revendications précédentes pour réaliser la stabilisation active du roulis et pour réaliser le réglage actif du carrossage de roue en fonction d'un état du véhicule automobile.
